Europäisches Patentamt

European Patent Office

Office européen des brevets

(11) Publication number: **0 297 188**
**A1**

## EUROPEAN PATENT APPLICATION

(21) Application number: 87305905.9

(22) Date of filing: 03.07.87

(51) Int. Cl.⁴: **F16B 3/00 , A45F 3/04**

(43) Date of publication of application:
**04.01.89 Bulletin 89/01**

(84) Designated Contracting States:
**DE ES FR GB**

(71) Applicant: **KARRIMOR INTERNATIONAL LIMITED**
**Avenue Parade**
**Accrington Lancashire, BB5 6PR(GB)**

(72) Inventor: **Parsons, Michael Charles**
**Lower Barn Clough End Road**
**Haslington Rossendale Lancashire(GB)**
Inventor: **Farnworth, Michael Adrian**
**52 Wolseley Road**
**Broadgate Preston, PR2 8EU(GB)**

(74) Representative: **Barker, Rosemary Anne et al**
**c/o O'BRIENS 94 Market Street**
**Manchester M1 1PJ(GB)**

(54) **Linear attachment means.**

(57) A first elongate strip (20) has a plurality of openings (22) arranged along its length and a longitudinal edge margin (21) of increased width which is located in one of a pair of opposing slotted channels (31, 32) in a guide element (30). A second elongate strip (10) has at least one opening (12) therethrough and a similar longitudinal edge margin (11) of increased width which is slidingly accommodated in the other of the slotted channels (31, 32). The second strip (10) is adjustable relative to the first strip (20) and securable thereto at any selected position by fastening means (40) engaging through respective aligned openings (22, 12). The connection device (40) comprises a bridging section (41) at opposite ends of which are a first laterally projecting limb (42) having a terminal enlargement (44) serving as stop means and a second laterally projecting limb (43) having a protrusion (45) serving as catch means so that the second limb (43) is always inserted first through the respective openings (22, 12).

Fig. 5

# LINEAR ATTACHMENT MEANS

This invention relates to linear attachment means and a rucksack assembly system incorporating same.

Hitherto it has been conventional to produce a range of rucksacks based on any particular design to cater for the requirements of users for differing capacities, for different numbers of internal compartments, for the presence or absence of external pockets or pockets at different positions and even for different strap positions for users of different stature and different torso length. This means that a considerable number of different types have to be manufactured and stocked which increases costs for producers and distributors.

To some extent, the number of different models in a range may be reduced by provision of detachable pockets. These are held onto the main body of the rucksack by fastening means, such as sliding clasp fasteners, or straps, or press studs, or hooks etc., but can obviously only be attached thereto at certain pre-determined positions where the relevant part of the fastening means is provided on the main body. Unfortunately, these detachable pockets have not been found to be particularly satisfactory as they looked "added on" and are not aesthetically pleasing. Moreover, where they are attached to the main body of the rucksack only at individual points, e.g. by means of press studs, they are unstable and tend to swing or sag.

Recently further attempts have been made by rucksack manufacturers to reduce the number of different models required by providing vertical or transverse adjustment means for shoulder straps or lumbar pads so that a rucksack harness can be adapted for users of different torso length and different torso breadth respectively.

In their earlier U.K. Patent Application, No. 2185061, the applicants disclose a novel means of linear attachment which can be used generally for connecting edges of material or other objects together such that the position of one edge or object relative to the other edge or object is freely selectable and, more specifi cally, for connecting component parts, such as pockets, straps and hip belt wings to rucksack bodies.

The aforesaid linear attachment means comprised an elongate guide element formed with opposing longitudinal slotted channels. a first elongate strip having a plurality of openings arranged along its length and a longitudinal edge margin of increased width which is located in one of the slotted channels of the guide element, a second elongate strip having at least one opening thethrough and a longitudinal edge margin of increased width which is located in the other of the slotted channels of the guide element. the longitudinal edge margin of one of said strips being permanently fixed into its respective slotted channel whilst the longitudinal edge margin of the other of said strips is slidingly accommodated in its respective slotted channel, and fastening means engageable in the opening or one of the openings of the second strip and a respective one of the openings of the first strip to secure the second strip at a selected position relative to the first strip.

The fastening means disclosed in the earlier application is a connection device comprising a bridging section at opposite ends of which are respective end pieces projecting laterally from the same side of the bridging section and adapted for insertion through respective openings of the first and second strips. one of said end pieces being provided with a flexible strap of length sufficient to extend beyond the other of said end pieces, which is formed as a loop and therefore has an opening for the strap to extend therethrough.

The object of the present invention is to provide similar attachment means incorporating a new and improved connection device. which is both simpler to produce and simpler to use compared to the previous such device.

To this end, the invention provides linear attachment means of the above-mentioned type, characterised in that the fastening means is a connection device comprising an elongate guide element formed with opposing longitudinal slotted channels. a first elongate strip having a plurality of openings arranged along its length and a longitudinal edge margin of increased width which is located in one of the slotted channels of the guide element. a second elongate strip having at least one opening therethrough and a longitudinal edge margin of increased width which is located in the other of the slotted channels of the guide element. the longitudinal edge margin of at least one of said strips being slidingly accommodated in its respective slotted channel, and fastening means engageable in the opening or one of the openings of the second strip and a respective one of the openings of the first strip to secure the second strip at a selected position relative to the first strip, characterised in that the fastening means is a connection device comprising a bridging section at opposite ends of which are respective limbs projecting laterally from the same side of the bridging section. the first limb having an enlargement or transverse flange constituting stop means at or adjacent its free end remote from the bridging section. whilst the second limb is capable of flexing relative to the bridging section and has a protrusion constituting catch means on its side remote from the first limb, the second limb being insertable through each of the openings in turn so that the strips are secured with the first limb extending through the one opening and the second limb through the other.

The invention also provides a rucksack assembly system comprising a basic rucksack body having a rear panel intended to rest against the back of a wearer and attached substantially vertically at each side thereof a first elongate strip having a plurality of openings arranged along its length and a free longitudinal edge margin of increased width which is fixed into one of a pair of opposing longitudinal slotted channels of a guide element, and various component parts such as detachable pockets, hip belt wings or straps, each having a length of a second strip attached thereto, each length of second strip having at least one opening therethrough and a free longitudinal edge margin of increased width which can be slidingly accommodated in the other slotted channel of the guide element to connect the relevant component part to the rucksack body and permit vertical adjustment of its position, fastening means in the form of a connection device having the features just mentioned being provided to engage in the opening of the second strip and a respective one of the openings of the first strip to secure the second strip at a selected position relative to the first strip.

Alternatively, the guide element may be fixed to the second strip attached to the component part and slidingly adjustable relative to the first strip, which is attached to the rucksack body.

The invention also provides a rucksack assembly system comprising a rucksack body having a rear panel intended to rest against the back of a wearer and attached substantially horizontally at or near the top of said panel a first elongate strip having a plurality of openings arranged along its length and a free longitudinal edge margin of increased width which is fixed into one of a pair of opposing longitudinal slotted channels of a guide element, and a pair of shoulder straps each having a length of a second strip attached thereto, each length of second strip having at least one opening therethrough and a free edge margin of increased width which can be slidingly accommodated in the other slotted channel of the guide element to connect the relevant shoulder strap to the rucksack body and permit sideways adjustment of its position, fastening means being provided to engage in the opening in the second strip and a respective one of the openings of the first strip to secure the second strip at a selected position relative to the first strip. Again the fastening device, in accordance with the invention, is a connection device comprising an elongate guide element formed with opposing longitudinal slotted channels, a first elongate strip having a plurality of openings arranged along its length and a longitudinal edge margin of increased width which is located in one of the slotted channels of the guide element, a second elongate strip having at least one opening therethrough and a longitudinal edge margin of increased width which is located in the other of the slotted channels of the guide element, the longitudinal edge margin of at least one of said strips being slidingly accommodated in its respective slotted channel, and fastening means engageable in the opening or one of the openings of the second strip and a respective one of the openings of the first strip to secure the second strip at a selected position relative to the first strip, characterised in that the fastening means is a connection device comprising a bridging section at opposite ends of which are respective limbs projecting laterally from the same side of the bridging section, the first limb having an enlargement or transverse flange constituting stop means at or adjacent its free end remote from the bridging section, whilst the second limb is capable of flexing relative to the bridging section and has a protrusion constituting catch means on its side remote from the first limb, the second limb being insertable through each of the openings in turn so that the strips are secured with the first limb extending through the one opening and the second limb through the other.

The invention will be described further, by way of example, with reference to the accompanying drawings, in which:

Fig. 1 is a fragmentary side view illustrating edges of two pieces of material to be connected by a preferred embodiment of the linear attachment means of the present invention;

Fig. 2 is a fragmentary enlarged cross-section along the line II-II shown in Fig. 1;

Fig. 3 is a fragmentary side view similar to Fig. 1 but showing the edges of material when actually connected together by the linear attachment means;

Fig. 4 is an enlarged cross-section along the line IV-IV shown in Fig. 3;

Fig. 5 is a fragmentary perspective view, to an enlarged scale, illustrating edges of material connected together by the same attachment means as shown in Figs. 1 to 4;

Fig. 6 is a diagrammatic view of a rucksack assembly incorporating several lengths of the linear attachment means as shown in Figs. 1 to 5; and

Fig. 7 is an exploded view illustrating a further use of the linear attachment means of Figs. 1 to 5, namely connecting individual pocket-like receptacles to form a back pack assembly.

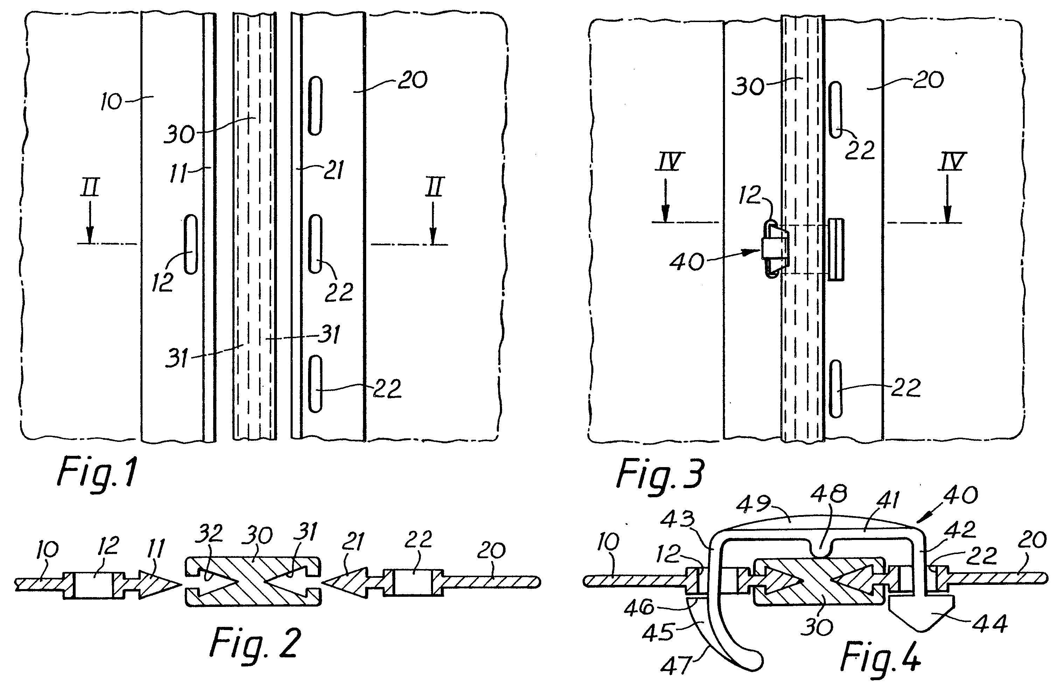

With reference to Figs. 1 to 5, a preferred embodiment of the linear attachment device of the invention consists of two, generally similar, elongate strips 10, 20, a guide element 30 located therebetween and fastening means in the form of a connection device 40 effective to secure one of the strips relative to the other.

The strips 10, 20 are made of flexible plastics material, approximately 2cm wide and 1mm thick, and they have substantially identical longitudinal edge margins 11, 21 of increased width which have an arrowhead shape in cross-section. The first strip 20 is formed with a plurality of elongate openings 22, in the form of reinforced eyelets, arranged along its length closely adjacent the expanded edge margin 21, whilst the second strip 10 is formed with only a single elongate opening 12, also in the form of a reinforced eyelet. The guide element 30 is made of a more rigid type of plastics material than the strips 10, 20. It may be about 1cm wide and 5mm thick and it is provided with opposing longitudinal slotted channels 31, 32, each of corresponding arrowhead shape to the increased width edge margins 11, 21 of the strips 10, 20.

The guide element 30 is of substantially the same length as the first strip 20 and the increased width edge margin 21 is fixed into one of the channels 31, such that the main portion of the strip 20 projects through the slot forming the mouth of the channel, by gluing, or by virtue of co-extrusion of the strip 20 and the element 30. The second strip 10 is somewhat shorter in length than the first strip 20 and the guide element 30, although this is not apparent from Figs. 1 to 5 of the drawings. The increased width edge margin 11 of the second strip 10 is not fixed in the other channel 32 of the guide element 30: it is slidingly accommodated therein once inserted from one end thereof.

The second strip 10 can thus be slid lengthwise in the channel 32 to take up any desired position relative to the first strip 20 and the guide element 30. When the opening 12 is in alignment with a selected one of the openings 22, the second strip 10 can be secured relative to the first strip 20 by the connection device 40.

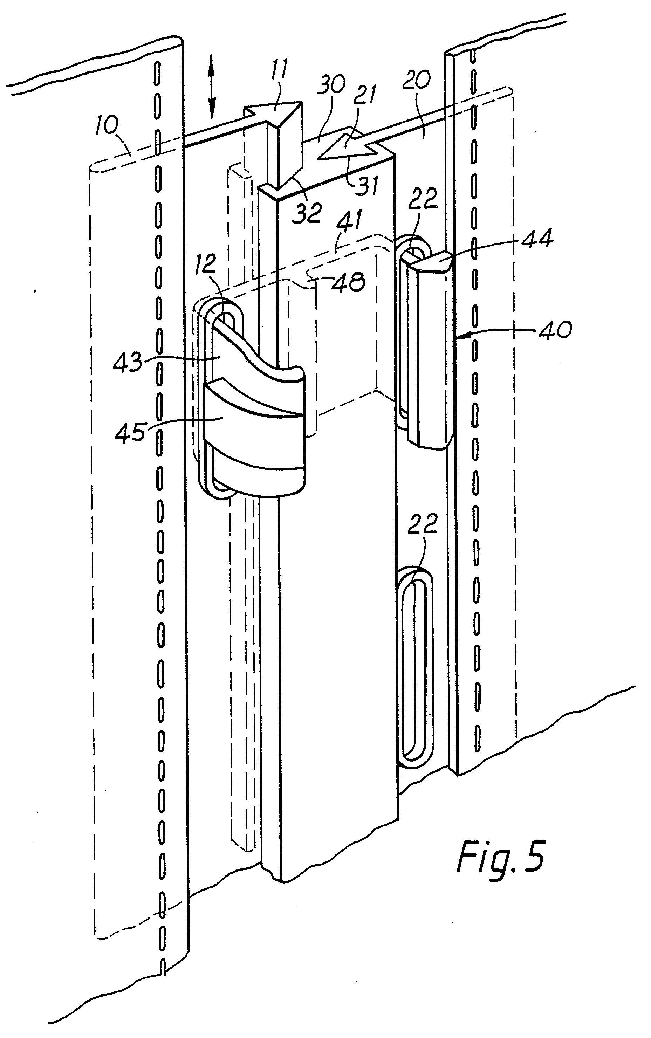

As shown in Figs. 4 and 5, the connection device 40 is moulded in one piece of resilient plastics material and comprises a bridging section 41 from opposite ends of which respective limbs 42, 43 project laterally. Thus, the device 40 approximates to a short channel section, with the bridging section 41 formed as a substantially rectangular web interconnecting the limbs 42, 43 which are also in the form of webs.

At its end remote from the bridging section 41, the first limb 42 has an enlargement 44 which is arrow head shaped in cross-section and which in longitudinal extent projects beyond the side edges of the remainder of the device 40. The second limb 43 is longer than the first limb 42 and its end portion remote from the bridging section 40 curves towards the first limb 42. The second limb 43 is capable of flexing relative to the bridging section 40 and being bent over towards the first limb 42. A protrusion in the form of a ramp 45 is provided in a central region of the second limb 43 on its surface remote from the first limb 42 and also in its end region remote from the bridging section 41. This ramp 45 has a shoulder 46 facing the end of the limb 43 joining to the bridging section 41 and an inclined surface 47 extending around the curved region towards the free end of the limb 43.

The bridging section 41 itself is provided with a rib 48 which extends thereacross on the same side as the limbs 42, 43 generally parallel to the limbs 42, 43 and substantially midway therebetween. Also, on its surface remote from the limbs 42, 43 and the rib 48, the bridging section 41 is formed with a relatively broad central ridge 49, which has a convex surface and extends approximately perpendicular to the rib 48 and the limbs 42, 43.

To achieve the illustrated configuration, the second limb 43, followed by the bridging section 41 is inserted upwardly, as viewed in Fig. 4, through the selected opening 22 in the first strip 20 until the first limb 42 extends through that opening 22 and is retained there by the arrow-head enlargement 44 acting as stop means. In this respect the openings 12, 22 are of appropriate width to allow the protrusion 45 on the second limb 43 and the rib 48 and ridge 49 on the bridging section 41 to pass therethrough. However, as the width of the openings 12, 22 is not much greater than the maximum width of the rib 48, the bridging section 41 and the ridge 49, the presence of the rib 48 and the ridge 49 as well as the angle between the bridging section 41 and the first limb 42 tend to prevent the device inadvertently slipping back through the opening 22 after positive insertion therethrough as just described, thus preventing loss of the connection device 40. The second limb 43 is then pushed through the opening 12 in the second strip 10 by flexing it towards the first limb 42, until the protrusion 45 is fully therethrough, whereupon the shoulder 46 acts as catch means and engages behind the reinforced edge defining the opening 12. In this way, a secure and non-flexible connection is achieved between the strips 10 and 20.

The catch means 45 can, of course, be readily released simply by flexing the second limb 43 towards the first limb 42 again.

When connection of the strips 10 and 20 is not required, the device 40 can advantageously be retained by the first strip 20, with the first limb 42 extending through the opening 22, as described above, and the second limb 43 swinging free until required again for connection of another strip or other apertured element.

As illustrated, in Fig. 5, the strips 10, 20 may be attached, e.g. by stitching, to the edges of respective pieces of material, such as textile fabric, and the linear attachment means used to connect these edges of material together at selected relative positions.

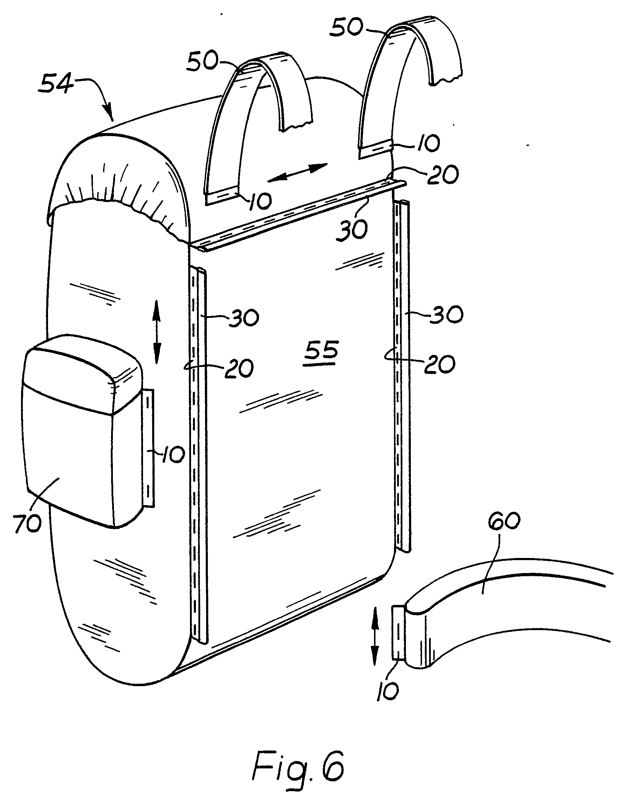

The above-described linear attachment means, which provides an adjustable, non-flexible and secure attachment, possibly extending over a considerable length, will undoubtedly have various applications. One particular application is in relation to a rucksack assembly system, as illustrated diagrammatically in Fig. 6. A length of the first strip 20 with the guide element 30 fixed thereto may be sewn into seams along each side and along the top of a rear panel 55 of the rucksack body 54, as shown. Shoulder straps 50, each provided with a short length of the second strip 10, may be attached to the strip 20 along the top and be horizontally adjusted to suit the physique of the wearer. Obviously, a respective connection device (now shown) will be provided to secure each strap 50 at the appropriately chosen position. Hip belt wings 60 (of which only one is shown) may be similarly provided with lengths of the second strip 10 whereby they can be attached to the respective side strips 20 and vertically adjusted, again to suit the stature of the wearer. Detachable pockets 70 may also be provided with lengths of the second strips 10 whereby they can be attached at selected positions to the side strips 20. As shown, the strips 10 on the pockets 70 may be provided with two openings 12 so that two connection devices (not shown) can be used for reliably secure attachment to the rucksack body 54. The pockets may be secured along their other longitudinal side by further linear attachment means or by conventional means such as press studs, or straps, or sliding clasp fasteners. Other components which can be adjustably attached to the body of the rucksack 54 in similar manner are straps which may be used to lash items to the exterior of the sack or to maintain the internal sack volume. Of course, these are only advantageous examples of how the linear attachment means can be used in a rucksack assembly system and variations are possible. For example, the pockets may be attached to the front of the sack and/or along their upper and lower edges.

The linear attachment means of the invention may also advantageously be used to secure a bag or other container to a frame member of a bicycle.

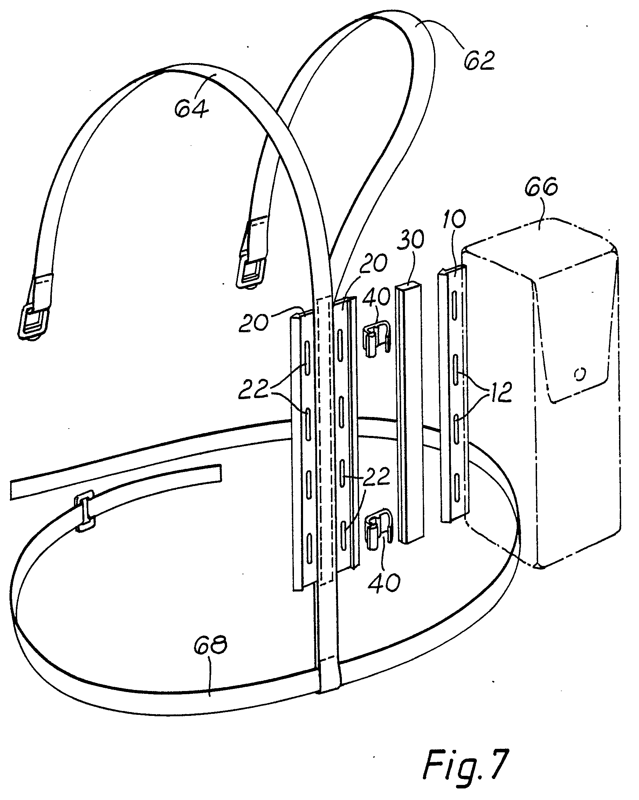

A further application of the linear attachment means of the invention is illustrated in Fig. 7. In this case two elongate strips 20 are attached back to back, so to speak, by having their edges stitched between two sections of webbing, which extend beyond the strips to serve as respective shoulder straps 62, 64. Individual pocket-like receptacles 66, having corresponding strips 10 secured thereto can then be secured to the strips 20 at the opposing sides of the webbing by way of respective guide elements 30 and connection devices 40. In other words, the receptacles 66 are secured to the webbing which interconnects them by respective lengths of linear attachment means similar to that shown in Figs. 1 to 5, the only differences being the equal number of openings 12, 22 in the strips 10, 20, and the fact that the guide elements 30 are not necessarily fixed to either of the strips 10, 20.

At the other end of the strips 20 to the shoulder straps 64, 66, the webbing is folded back on itself and connected to a waist band 68 so the entire assembly constitutes a handy and readily demountable backpack.

In respect of the linear attachment means itself, other variations are possible compared to the embodiments described above with reference to Figs. 1 to 6 and to Fig. 7. For example, the increased width edge margins of the two strips may have a different cross-section e.g. dovetail shaped or circular. Also, the enlargement serving as stop means and the protrusion serving as catch means on the connection device may vary in configuration, and the connection device need not be moulded in one piece.

It should also be noted that either the first strip or the second strip may be fixed to the guide element, the other one being slidably adjustable, so when applied to a rucksack assembly the guide element may either be fixed to the strip which is attached to the rucksack body or the strip portion which is attached to the relevant component e.g. pocket or hip belt wing. In other applications, however, such as the backpack of Fig. 7, both the strips 10, 20 may be slidably adjustable relative to the interconnecting guide element 30.

## Claims

1. Linear attachment means comprising an elongate guide element (30) formed with opposing longitudinal slotted channels (31, 32), a first elongate strip (20) having a plurality of openings (22) arranged along its length and a longitudinal edge margin (21) of increased width which is located in one of the slotted channels (31) of the guide element (30), a second elongate strip (10) having at least one opening (12) therethrough and a longitudinal edge margin (11) of increased width which is located in the other of the slotted channels (32) of the guide element (30), the longitudinal edge margin (11, 21) of at least one of said strips (10, 20) being slidingly accommodated in its respective slotted channel (31, 32), and fastening means (40) engageable in the opening or one of the openings (12) of the second strip (10) and a respective one of the openings (22) of the first strip (20) to secure the second strip (10) at a selected position relative to the first strip (20), characterised in that the fastening means (40) is a connection device comprising a bridging section (41) at opposite ends of which are respective limbs (42, 43) projecting laterally from the same side of the bridging section, the first limb (42) having an enlargement (44) or transverse flange constituting stop means at or adjacent its free end remote from the bridging section, whilst the second limb (43) is capable of flexing relative to the bridging section and has a protrusion (45) constituting catch means on its side remote from the first limb, the second limb (43) being insertable through each of the openings (12, 22) in turn so that the strips (10, 20) are secured with the first limb (42) extending through the one opening and the second limb (43) through the other.

2. Linear attachment means as claimed in claim 1 wherein the longitudinal edge margins (11, 21) of increased width of the first and second strips (10, 20) have substantially the same cross-sectional shape.

3. Linear attachment means as claimed in claim 1 or 2 wherein the longitudinal edge margins (11, 21) of increased width of both first and second strips (10, 20) have arrowhead shapes in cross-section.

4. Linear attachment means as claimed in claim 1, 2 or 3 wherein the slotted channels (31, 32) of the guide element (30) are of corresponding shape to the longitudinal edge margins (11, 21) of increased width of the first and second strips (10, 20) such that the latter are a close fit in their respective channels.

5. Linear attachment means as claimed in any preceding claim wherein the connection device (40) is moulded in one piece from resilient plastics material.

6. Linear attachment means as claimed in any preceding claim wherein the protrusion (45) on the second limb (43) of the connection device (40) is in the form of a ramp having a shoulder (46) facing the end of the limb connected to the briding section and an inclined surface (47) extending towards the free end of the limb.

7. Linear attachment means as claimed in any preceding claim wherein the bridging section (41) of the connection device (40) is provided with a rib (48) extending substantially midway between the limbs (42, 43) and at the same side thereof as the limbs.

8. Linear attachment means as claimed in any preceding claim wherein the bridging section (41) of the connection means is provided with a convex ridge (49) at the opposite side thereof to the limbs (42, 43).

9. A rucksack assembly system comprising a basic rucksack body (54) having a rear panel (55) intended to rest against the back of a wearer and attached substantially vertically at each side thereof a first elongate strip (20) having a plurality of openings (22) arranged along its length and a free longitudinal edge margin (21) of increased width which is fixed into one of a pair of opposing longitudinal slotted channels (31, 32) of a guide element (30), and various component parts, such as detachable pockets (70), hip belt wings (60) or straps (50), each having a length of a second strip (10) attached thereto, each length of second strip (10) having at least one opening (12) therethrough and a free longitudinal edge margin (11) of increased width which can be slidingly accommodated in the other slotted channel of the guide element (30) to connect the relevant component part to the rucksack body (54) and permit vertical adjustment of its position, fastening means (40) being provided to engage in the opening of the second strip and a respective one of the openings of the first strip to secure the second strip at a selected position relative to the first strip, characterised in that the fastening means (40) is a connection device comprising a bridging section (41) at opposite ends of which are respective limbs (42, 43) projecting laterally from the same side of the bridging section, the first limb (42) having an enlargement (44) or transverse flange constituting stop means at or adjacent its free end remote from the bridging section, whilst the second limb (43) is capable of flexing relative to the bridging section and has a protrusion (45) constituting catch means on its side remote from the first limb, the second limb (43) being insertable through each of the openings (12, 22) in turn so that the strips (10, 20) are secured with the first limb (42) extending through the one opening and the second limb (43) through the other.

10. A rucksack assembly system comprising a basic rucksack body (54) having a rear panel (55) intended to rest against the back of a wearer and attached substantially vertically at each side thereof a first elongate strip (20) having a plurality of openings (22) arranged along its length and a free longitudinal edge margin (21) of increased width, and various component parts, such as detachable pockets (70), hip belt wings (60) or straps (50), each having a length of a second strip (10) attached thereto, each length of second strip (10) having at least one opening (12) therethrough and a free longitudinal edge margin (11) of increased width which is fixed into one of a pair of opposing longitudinal slotted channels (31, 32) of a guide element (30), the relevant component part being connectable to and vertically adjustable relative to the rucksack body (54) by the longitudinal edge margin of the first strip (20) being slidingly accommodated in the other slotted channel of the guide element (30), fastening means (40) also being provided to engage in the opening (12) of the second strip (10) and a respective one of the openings (22) of the first strip (20) to secure the second strip (10) at a selected position relative to the first strip (20), characterised in that the fastening means (40) is a connection device comprising a bridging section (41) at opposite ends of which are respective limbs (42, 43) projecting laterally from the same side of the bridging section, the first limb (42) having an enlargement (44) or transverse flange constituting stop means at or adjacent its free end remote from the bridging section, whilst the second limb (43) is capable of flexing relative to the bridging section and has a protrusion (45) constituting catch means on its side remote from the first limb, the second limb (43) being insertable through each of the openings (12, 22) in turn so that the strips (10, 20) are secured with the first limb (42) extending through the one opening and the second limb (43) through the other.

11. A rucksack assembly system comprising a rucksack body (54) having a rear panel (55) intended to rest against the back of a wearer and attached substantially horizontally at or near the top of said panel a first elongate strip (20) having a plurality of openings (22) arranged along its length and a free longitudinal edge margin (21) of increased width which is fixed into one of a pair of opposing longitudinal slotted channels (31, 32) of a guide element (30), and a pair of shoulder straps (50) each having a length of a second strip (10) attached thereto, each length of second strip (10) having at least one opening (12) therethrough and a free edge margin (11) of increased width which can be slidingly accommodated in the other slotted channel of the guide element (30) to connect the relevant shoulder strap (50) to the rucksack body (54) and permit sideways adjustment of its position, fastening means (40) being provided to engage in the opening (12) in the second strip (10) and a respective one of the openings (22) of the first strip (20) to secure the second strip (10) at a selected position relative to the first strip (20), characterised in that the fastening means (40) is a connection device comprising a bridging section (41) at opposite ends of which are respective limbs (42, 43) projecting laterally from the same side of the bridging section, the first limb (42) having an enlargement (44) or transverse flange constituting stop means at or adjacent its free end remote from the bridging section, whilst the second limb (43) is capable of flexing relative to the bridging section and has a protrusion (45) constituting catch means on its side remote from the first limb, the second limb (43) being insertable through each of the openings (12, 22) in turn so that the strips (10, 20) are secured with the first limb (42) extending through the one opening and the second limb (43) through the other.

12. A rucksack assembly system as claimed in claim 10, 11 or 12 wherein the longitudinal edge margins (11, 21) of increased width of both first and second strips (10, 20) have arrowhead shapes in cross-section and the slotted channels (31, 32) are of corresponding shape so that the longitudinal edge margins are a close fit therein.

Fig. 1

Fig. 2

Fig. 3

Fig. 4

EP 0 297 188 A1

*Fig.5*

Fig. 6

*Fig.7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 209 381 (CLAK) --- | | F 16 B 3/00 |
| A | FR-A-1 356 348 (LEROUX) --- | | A 45 F 3/04 |
| A | US-A-3 902 640 (GEIBEN) --- | | |
| A | FR-A- 858 534 (PRIOUX) ----- | | |

TECHNICAL FIELDS
SEARCHED (Int. Cl.4)

F 16 B
E 04 H
A 45 F
A 45 C

The present search report has been drawn up for all claims

| Place of search | Date of completion of the search | Examiner |
|---|---|---|
| THE HAGUE | 08-03-1988 | SIGWALT C. |